# EUROPÄISCHE PATENTANMELDUNG

(11) **EP 3 859 941 A1**
(43) Veröffentlichungstag der Anmeldung: **04.08.2021**
(21) Anmeldenummer: 20154692.6
(22) Anmeldetag: 30.01.2020
(51) Int. Cl.: H02K 1/02, H02K 1/27, H01F 1/00

(54) **MAGNETBAUTEIL MIT ELASTISCHEM MAGNETCOMPOUND**

(71) Anmelder: Max Baermann GmbH, 51429 Bergisch-Gladbach (DE)
(72) Erfinder: KUNTSCHKE, Patrick, 50677 Köln (DE)
(74) Vertreter: Lippert Stachow Patentanwälte Rechtsanwälte

(57) **Zusammenfassung**

Die Erfindung betrifft ein Magnetbauteil 100 umfassend einen Grundkörper 1 aus einem Grundkörpermaterial und ein mit dem Grundkörper 1 positionsfest verbundenes magnetisches Kunststoffteil 2, wobei das Kunststoffteil 2 aus einem Compound hergestellt ist, das ein polymeres Trägermaterial und in das polymere Trägermaterial eingebettete magnetische Partikel aufweist, wobei das Grundkörpermaterial und das Compound unterschiedliche thermische Ausdehnungsverhalten aufweisen. Das Kunststoffteil 2 weist eine Anlagefläche auf, über die hinweg es mit dem Grundkörper 1 positionsfest verbunden ist, wobei das Compound zu mindestens 60 Gew. -%, insbesondere zwischen 60 Gew. -% und 95 Gew. -%, aus den magnetischen Partikeln besteht und als elastisches Material ausgebildet ist zur Vermeidung von Rissbildungen in dem magnetischen Kunststoffteil 2, wobei insbesondere das Grundkörpermaterial metallisch ist und der Grundkörper 1 insbesondere nach Art einer Hülse, Scheibe oder Welle ausgebildet ist.

## Beschreibung

Die Erfindung betrifft ein Magnetbauteil gemäß dem Oberbegriff von Anspruch 1 sowie die Verwendung eines Grundkörpers, magnetischer Partikel und eines Polymerpulvers zur Realisierung eines Magnetbauteils.

Gattungsgemäße Magnetbauteile werden üblicherweise dazu verwendet, um einen Magneten, insbesondere Permanentmagneten an einem rotierenden Bauteil zu befestigen, damit dieser Magnet als Motor- oder Sensormagnet verwendet werden kann. Es ist bekannt, zu diesem Zweck ein Magnetbauteil zu realisieren, das ein magnetisches Kunststoffteil und einen Grundkörper umfasst. Das magnetische Kunststoffteil umfasst üblicherweise magnetische, insbesondere hartmagnetische Partikel, die in ein polymeres Trägermaterial eingebettet sind. Solche Kunststoffteile, bei denen Materialteilchen in ein polymeres Trägermaterial bzw. eine Polymermatrix eingebettet sind, werden üblicherweise als hochgefüllte Kunststoffteile bezeichnet. Enthalten solche Kunststoffteile zu einem hohen Füllgrad magnetischer Partikel, werden sie häufig als kunststoffgebundener Dauermagnet bezeichnet. Als magnetische, insbesondere hartmagnetische Partikel sind Partikel aus zumindest einem Material gemeint, das aufgrund seiner magnetischen Eigenschaften magnetisierbar oder bereits magnetisiert ist.

Grundsätzlich haben sich herkömmliche Magnetbauteile in vielerlei Hinsicht als besonders geeignet erwiesen, um einen Magneten an einem rotierenden Bauteil, wie beispielsweise einer Welle oder Buchse, zu befestigen. Während das Kunststoffteil den Magneten bereitstellt, dient der Grundkörper der drehfesten Fixierung an dem zu rotierenden Bauteil. Üblicherweise ist hierzu der Grundkörper nach Art einer Buchse oder Welle ausgebildet und kann in Presspassung auf ein korrespondierendes, zu rotierendes Bauteil, wie beispielsweise Welle oder Buchse, aufgepresst und somit montiert werden. Das magnetische Kunststoffteil ist üblicherweise positionsfest mit dem Grundkörper verbunden, so dass bei dem bestimmungsgemäßen Einsatz des Magnetbauteils das Kunststoffteil jedweder Lageveränderung des Grundkörpers, insbesondere bei einer Rotation des Grundkörpers über eine ihm zugeordnete Rotationsachse, die bei der bestimmungsgemäßen Verwendung des Magnetbauteils mit der Achse übereinstimmt, um die das zu rotierende Bauteil gedreht wird, wenn das Magnetbauteil an ihm montiert ist, folgt, so dass über Detektion des von dem magnetischen Kunststoffteil erzeugten Magnetfelds Rückschlüsse auf die Rotation des zu rotierenden Bauteils gezogen werden können, an dem das Magnetbauteil angebracht ist. Selbstverständlich wird üblicherweise das Magnetbauteil mittels des Grundkörpers drehfest mit dem zu rotierenden Bauteil verbunden, so dass eine bestimmte Drehlage des Magnetbauteils einer bestimmten Drehlage des zu rotierenden Bauteils um die genannte Achse zugeordnet werden kann.

Allerdings treten bei der Realisierung eines geeigneten gattungsgemäßen Magnetbauteils verschiedene Probleme auf. Zum einen ist der Grundkörper üblicherweise aus einem anderen Material hergestellt als das Kunststoffteil, da der Grundkörper und das magnetische Kunststoffteil jeweils andere Eigenschaften aufweisen müssen. So ist der Grundkörper dazu vorgesehen, eine zuverlässige, drehfeste Fixierung an einem zu rotierenden Bauteil zu ermöglichen, wohingegen das magnetische Kunststoffteil den Zweck erfüllen muss, einen Magneten, insbesondere Permanentmagneten mit eindeutig vorbestimmtem und auf den jeweiligen Anwendungszweck gezielt ausgerichteten Magnetfeld bereitzustellen. Entsprechend unterscheidet sich üblicherweise das thermische Ausdehnungsverhalten des Grundkörpers, von dem thermischen Ausdehnungsverhalten des magnetischen Kunststoffteils, und üblicherweise ist der Grundkörper aus einem wesentlich härteren Material hergestellt als das magnetische Kunststoffteil. Das magnetische Kunststoffteil muss hingegen so hergestellt sein, dass die magnetischen Partikel möglichst gleichmäßig und mit ausreichend hoher Dichte in dem Kunststoffteil enthalten sind und das Kunststoffteil auf möglichst einfache und vorbestimmbare Weise an den Grundkörper angespritzt werden kann.

Diese an gattungsgemäße Magnetbauteile gestellten Anforderungen erschweren die Herstellung eines robusten und dauerhaft einsetzbaren Magnetbauteils. Denn aufgrund der unterschiedlichen Materialeigenschaften von Grundkörpermaterial und dem Material des magnetischen Kunststoffteils und deren unterschiedlichen thermischen Ausdehnungsverhalten treten häufig Rissbildungen in dem magnetischen Kunststoffteil auf, da die unterschiedlichen thermischen Ausdehnungsverhalten zu Spannungen in dem Kunststoffteil führen, wenn das Kunststoffteil positionsfest mit dem Grundkörper verbunden ist. Dabei ist insbesondere zu berücksichtigen, dass typischerweise gattungsgemäße Magnetbauteile in Umgebungen eingesetzt werden, bei denen erhebliche Temperaturschwankungen auftreten, insbesondere von -10 °C bis +100 °C, insbesondere -30 °C bis +120 °C, insbesondere -40 °C bis 125 °C, insbesondere -40 °C bis +150 °C. Darüber hinaus müssen im Einsatz, insbesondere im Einsatz bei einem Kfz, solche Magnetbauteile Temperaturschwankungen im genannten Temperaturbereich über viele Zyklen, insbesondere mehrere hundert Zyklen, insbesondere über tausend Zyklen hinweg aushalten. Diesen Problemen wurde beispielsweise im Stand der Technik dadurch begegnet, dass zwischen dem Grundkörper und dem magnetischen Kunststoffteil eine elastische Zwischenschicht vorgesehen wurde, über die das magnetische Kunststoffteil an den Grundkörper angebunden wird. Dies hat sich jedoch als kostspielig herausgestellt, und die Realisierung eines solchen Magnetbauteils erfordert eine sehr präzise Einhaltung von Verfahrensschritten, was Fehler bei der Herstellung solcher Magnetbauteile provoziert. Alternativ wurden Versuche unternommen, das Material des magnetischen Kunststoffteils in seinem thermischen Ausdehnungsverhalten möglichst nahe an das thermische Ausdehnungsverhalten des Grundkörpers anzupassen. Dies geht jedoch mit Qualitätseinbußen mit Bezug auf die Robustheit des Materials des magnetischen Kunststoffteils oder mit Bezug auf das Material des Grundkörpers und seiner Befestigbarkeit an einem zu rotierenden Bauteil einher.

Der vorliegenden Erfindung liegt die Aufgabe zugrunde, ein Magnetbauteil und/oder ein Verfahren zur Realisierung eines Magnetbauteils bereitzustellen, mit dem zumindest einige der Nachteile herkömmlicher Magnetbauteile bzw. Verfahren zumindest teilweise behoben werden können.

Als eine Lösung der genannten technischen Aufgabe schlägt die Erfindung ein Magnetbauteil vor, das einen Grundkörper aus einem Grundkörpermaterial und ein mit dem Grundkörper positionsfest verbundenes magnetisches Kunststoffteil umfasst. Das magnetische Kunststoffteil ist aus einem Compound hergestellt. Das Compound wird über in der Kunststofftechnik gängige Compoundierung aufbereitet, bei der hierzu vorgesehene handelsübliche Maschinen, wie beispielsweise Ein-Wellen-Extruder, Zwei-Wellen-Extruder, Ko-Kneter oder Dispersionskneter, zum Einsatz kommen. Das aufbereitete Compound wird einer Verarbeitungsanlage, beispielsweise einer Spritzgießanlage, zugeführt, in der das magnetische Kunststoffteil hergestellt wird, beispielsweise mittels Spritzgießverfahren. Erfindungsgemäß weist das Compound ein polymeres Trägermaterial und in das polymere Trägermaterial eingebettete magnetische Partikel auf. Insbesondere weisen das Grundkörpermaterial und das Compound, aus dem das magnetische Kunststoffteil hergestellt ist, unterschiedliche thermische Ausdehnungsverhalten auf. Das Grundkörpermaterial und das Compound weisen somit insbesondere eine unterschiedliche Abhängigkeit ihrer jeweiligen Volumen von der Temperatur auf, insbesondere innerhalb eines Temperaturbereichs von 0 °C bis 100 °C. Die unterschiedlichen thermischen Ausdehnungsverhalten sind bedingt dadurch, dass das Grundkörpermaterial nicht identisch mit dem Compound ist, da der Grundkörper anderen Zwecken dient als das Compound. Der Grundkörper soll dazu dienen, eine möglichst robuste und feste Fixierung des Magnetbauteils an einem zu rotierenden Bauteil zu ermöglichen, weshalb das Grundkörpermaterial bevorzugt eine hohe Zugfestigkeit und insbesondere Härte aufweist. Das Grundkörpermaterial kann beispielsweise eine Metallverbindung oder reines Metall sein, beispielsweise ein Stahl, Messing, Kupfer und/oder Aluminium. Das Grundkörpermaterial kann eine Kombination der genannten Materialien sein. Erfindungsgemäß weist das magnetische Kunststoffteil eine Anlagefläche auf, über die hinweg das magnetische Kunststoffteil mit dem Grundkörper positionsfest verbunden ist, so dass an jeder Stelle der Anlagefläche das magnetische Kunststoffteil positionsfest mit einer korrespondierenden Stelle des Grundkörpers verbunden ist. Besonders bevorzugt liegt das magnetische Kunststoffteil mit der Anlagefläche unmittelbar an dem Grundkörper an. Das magnetische Kunststoffteil kann beispielsweise direkt an den Grundkörper angespritzt hergestellt sein oder beispielsweise über die Anlagefläche hinweg mit dem Grundkörper verklebt sein. Ein Anspritzen des Kunststoffteils an den Grundkörper ist für eine einfache und kostengünstige Herstellung des Magnetbauteils unter Gewährleistung einer positionsfesten Zuordnung einer jeden Stelle der Anlagefläche des Kunststoffteils zu einer korrespondierenden Stelle des Grundkörpers besonders vorteilhaft. Erfindungsgemäß besteht das Compound zu mindestens 60 Gew.-%, insbesondere zu mindestens 70 Gew.-%, insbesondere zu mindestens 80 Gew.-%, insbesondere zwischen 60 Gew.-% und 95 Gew.-%, insbesondere zwischen 70 Gew.-% und 95 Gew.-%, insbesondere zwischen 80 Gew.-% und 95 Gew.-% aus den magnetischen Partikeln und ist als elastisches Material ausgebildet zur Vermeidung von Rissbildungen in dem magnetischen Kunststoffteil. Als elastisches Material ist ein Material bezeichnet, welches in einem Einsatztemperaturbereich innerhalb eines Dehnungsbereiches eine reversible Verformbarkeit aufweist. Besonders bevorzugt weist das elastische Material ein viskoelastisches Verformungsverhalten auf, das innerhalb des Dehnungsbereiches jedenfalls näherungsweise als elastisches Verformungsverhalten beschreibbar ist. Die magnetischen Partikel sind insbesondere hartmagnetische Partikel, besonders bevorzugt Ferrite, Neodym-haltige Partikel, beispielsweise NdFeB, und/oder beispielsweise SmCo, wobei insbesondere unterschiedliche magnetische Partikel in dem Compound enthalten sein können. Besonders bevorzugt sind mindestens 80 Gew.-%, insbesondere mindestens 90 Gew.-% der magnetischen Partikel Ferrite. Die magnetischen Partikel sind nicht mit der durch das Trägermaterial gebildeten polymeren Matrix kompatibel, sind in dem Compound jedoch an die Matrix des polymeren Trägermaterials gekoppelt, beispielsweise mit Hilfe von Haftvermitteln. Beispielsweise können als Haftvermittler Silane, Titanate, Zirkonate und Maleinsäureanhybrid-gepfropfte-Polyolefine Verwendung finden. Der Einsatz von Haftvermitteln und die Auswahl von geeigneten Haftvermittlern, wie beispielsweise aus den angegebenen Haftvermitteln, liegt im Rahmen fachmännischen Handelns eines Fachmanns zur Herstellung von magnetischen Compounds, wobei erfindungsgemäß das Compound bevorzugt zu 0,1 Gew.-% bis 3 Gew.-%, insbesondere zu 0,1 Gew.-% bis 1 Gew.-% aus solchen Haftvermittlern besteht.

Erfindungsgemäß ist das Compound als elastisches Material ausgebildet, damit Rissbildungen in dem magnetischen Kunststoffteil vermieden werden. Dabei ist zu berücksichtigen, dass erfindungsgemäß das magnetische Kunststoffteil über die Anlagefläche hinweg positionsfest mit dem Grundkörper verbunden ist, so dass wegen dieser positionsfesten Festlegung über die Anlagefläche hinweg Spannungen in dem Kunststoffteil auftreten können. An dieser Stelle sei darauf hingewiesen, dass allgemein bevorzugt das magnetische Kunststoffteil ausschließlich über die Anlagefläche hinweg mit dem Grundkörper verbunden ist zur Festlegung der Position des Kunststoffteils relativ zum Grundkörper. Spannungen in dem Kunststoffteil können beispielsweise aufgrund des unterschiedlichen thermischen Ausdehnungsverhalten von Grundkörpermaterial und Compound auftreten, insbesondere bei Temperaturwechseln des Magnetbauteils, d. h. wenn das Magnetbauteil unterschiedlichen Temperaturen ausgesetzt ist, wie dies bei dem bestimmungsgemäßen Einsatz des erfindungsgemäßen Magnetbauteils üblicherweise der Fall ist. Besonders bevorzugt ist das magnetische Kunststoffteil, d. h. ist die elastische Eigenschaft des Compounds, aus dem das magnetische Kunststoffteil hergestellt ist, so ausgebildet, dass bei Temperaturwechseln des Magnetbauteils über einen Temperaturbereich von -10 °C bis +100 °C hinweg, insbesondere von -30 °C bis +120 °C, vorzugsweise von -40 °C bis 125 °C hinweg Materialspannungen, die wegen der unterschiedlichen thermischen Ausdehnungsverhalten von Grundkörper und Kunststoffteil in dem Magnetbauteil auftreten, unter Vermeidung von Rissbildungen elastisch in dem Compound und somit in dem magnetischen Kunststoffteil aufgenommen werden. Insbesondere ist die Steifigkeit, vorzugsweise ausgedrückt durch den Zug-E-Modul, des Grundkörpers größer als die Steifigkeit des Kunststoffteils. Dabei ist selbstverständlich bei den Temperaturwechseln des Magnetbauteils stets unverändert das magnetische Kunststoffteil über die Anlagefläche hinweg positionsfest mit dem Grundkörper verbunden. Bevorzugt ist das magnetische Kunststoffteil aus einem Compound hergestellt, in dem die Bestandteile des Compounds, und somit die magnetischen Partikel und das polymere Trägermaterial, homogen verteilt sind, so dass das Kunststoffteil über sein Volumen hinweg eine homogene Verteilung der Bestandteile aufweist.

Besonders bevorzugt besteht das Compound zu zumindest 84 Gew.-% aus magnetischen Partikeln. Bevorzugt enthält das Compound zwischen 84 Gew.-% und 92 Gew.-% magnetische Partikel, wobei bei dem prozentualen Anteil der magnetischen Partikel auf das Verhältnis des Gewichts der magnetischen Partikel bezogen auf das Gewicht des Compounds, das die magnetischen Partikel enthält, abzustellen ist. Das polymere Trägermaterial, das das Compound aufweist, enthält vorzugsweise zumindest ein Polyamid, wobei das polymere Trägermaterial insbesondere mehr als ein Polyamid umfassen kann. Vorzugsweise besteht der nicht von den magnetischen Partikeln gebildete Restanteil des Compounds zu mindestens 50 %, insbesondere mindestens 70 %, insbesondere mindestens 80% aus Polyamid. Das Compound weist insbesondere einen E-Modul von 10 GPa bis 25 GPa auf. Das Compound ist bevorzugt derart beschaffen, dass Grundkörpermaterial und Compound ein unterschiedliches thermisches Ausdehnungsverhalten aufweisen. Das unterschiedliche thermische Ausdehnungsverhalten zeigt sich insbesondere dadurch, dass das Grundkörpermaterial einen geringeren linearen thermischen Ausdehnungskoeffizienten aufweist als das Compound. Insbesondere weist das Grundkörpermaterial ein isotropes thermisches Ausdehnungsverhalten auf, wodurch ein Prüfkörper aus dem Grundkörpermaterial, welcher bei einer Prüfung hinsichtlich seines thermischen Ausdehnungsverhaltens in jeder Richtung einen ähnlichen, insbesondere einen gleichen linearen thermischen Ausdehnungskoeffizienten aufweist. Besonders bevorzugt weist das Compound in jeder Raumrichtung einen ähnlichen linearen thermischen Ausdehnungskoeffizienten, insbesondere den gleichen linearen thermischen Ausdehnungskoeffizienten auf. Vorzugsweise weist das Compound, wenn es eine Temperatur aufweist, die unterhalb einer Glasübergangstemperatur des polymeren Trägermaterials liegt, einen anderen linearen thermischen Ausdehnungskoeffizienten auf, als wenn es eine Temperatur aufweist, die oberhalb der Glasübergangstemperatur ist. Insbesondere ist der lineare thermische Ausdehnungskoeffizient des Compounds bei einer Temperatur oberhalb der Glasübergangstemperatur größer als der lineare thermische Ausdehnungskoeffizient bei einer Temperatur unterhalb der Gasübergangstemperatur. Bevorzugt ist der lineare thermische Ausdehnungskoeffizient des Compounds in einem Temperaturbereich unterhalb der Glasübergangstemperatur zumindest doppelt so groß wie der lineare thermische Ausdehnungskoeffizient des Grundkörpers bei gleichem Temperaturbereich. Bevorzugt ist dieser Temperaturbereich durch die Grenztemperaturwerte -40 °C und 5 °C unter Glasübergangstemperatur definiert. Besonders bevorzugt ist der lineare thermische Ausdehnungskoeffizient des Compounds bei einem Temperaturbereich oberhalb der Glasübergangstemperatur zumindest doppelt so groß, insbesondere mehr als doppelt so groß wie der lineare thermische Ausdehnungskoeffizient des Grundkörpers bei gleichem Temperaturbereich. Bevorzugt ist dieser Temperaturbereich durch die Grenztemperaturwerte 5 °C über Glasübergangstemperatur und 125 °C definiert. Insbesondere weist das Grundkörpermaterial einen linearen thermischen Ausdehnungskoeffizienten in einem Bereich von 15^{∗}10⁻⁶ 1/K bis 25^{∗}10⁻⁶ 1/K auf. Insbesondere ist der lineare thermische Ausdehnungskoeffizient des Compounds bei einer Temperatur oberhalb der Glasübergangstemperatur zumindest 1,5-mal so groß, insbesondere zumindest als 2-mal so groß wie der lineare thermische Ausdehnungskoeffizient bei einer Temperatur unterhalb der Glasübergangstemperatur. Bei der Ermittlung des linearen thermischen Ausdehnungskoeffizienten ist allgemein auf eine Messung in Übereinstimmung mit den Anforderungen der ISO 11359-1/-2 abzustellen. Bei der Ermittlung des linearen thermischen Ausdehnungskoeffizienten ist für die Messung ein quaderförmiger Probekörper aus dem Compound mit Seitenlängen von 3 mm x 3 mm x 4 mm zu verwenden, der mit weniger als 1 N zu belasten und einer Temperaturänderung von 10 K pro Minute auszusetzen ist. Das Verhältnis der linearen thermischen Ausdehnungskoeffizienten von Grundkörpermaterial und Compound ist, sollten für das jeweilige Material unterschiedliche, insbesondere richtungsabhängige Ausdehnungskoeffizienten ermittelbar sein, aus Mittelwerten zu bilden.

Der Erfinder hat unerwartet feststellen können, dass das Compound mit den obengenannten Eigenschaften besonders robust gegenüber Temperatureinflüssen ist und sich dadurch besonders gut als Material für das magnetische Kunststoffteil eignet. Eine Rissbildung durch wiederholte Temperaturwechsel ist dabei besonders gut vermeidbar, wenn das Grundkörpermaterial seinerseits ein thermisches Ausdehnungsverhalten hat, welches in obengenannter Weise mit dem thermischen Ausdehnungsverhalten des Compounds korrespondiert. Das Verhältnis der linearen thermischen Ausdehnungskoeffizienten ermöglicht einerseits, dass das unterschiedliche thermische Ausdehnungsverhalten nicht zum Versagen des Magnetbauteils führt, und andererseits, dass sich Grundkörper und magnetisches Kunststoffbauteil nicht aus ihrer Verbindung zueinander lösen und relativ zueinander bewegbar werden. Das Vorsehen eines hohen Anteils an magnetischen Partikeln erlaubt es zudem, ein Magnetbauteil bereitzustellen, das eine große Flussdichte aufweist. Das Vorsehen eines hohen Anteils an magnetischen Partikeln geht üblicherweise mit einer Versprödung, also einer geringen Zugfestigkeit und einem hohen E-Modul eines Materials einher, in das die magnetischen Partikel eingebettet sind. Der Erfinder hat jedoch feststellen können, dass das Compound mit den obengenannten Eigenschaften eben solche Nachteile nicht aufweist und die Anforderungen an die mechanischen Eigenschaften erfüllen kann. Gleichzeitig ist es dem Erfinder gelungen, durch die obengenannte Eigenschaftskombination sicherzustellen, dass der Grundkörper mit dem magnetischen Kunststoffteil eine besonders sichere und positionsfeste Verbindung beibehält. Trotz eines hohen Anteils an magnetischen Partikeln ist mit den genannten Eigenschaften ermöglicht, eine hohe mechanische und thermische Belastbarkeit des Magnetbauteils vorzusehen, was einer hohen Lebensdauer des erfindungsgemäßen Magnetbauteils zugutekommt. Besonders bevorzugt weist das Compound solche elastischen Eigenschaften auf, dass entsprechende Rissbildungen vermieden werden, wenn das Magnetbauteil jeweils einer der Grenztemperaturen der oben angegebenen Bereiche über zumindest 20 Minuten ausgesetzt wird und anschließend der anderen angegebenen Grenztemperatur des Bereichs über zumindest 20 Minuten ausgesetzt wird, damit das gesamte Magnetbauteil jeweils nach Ablauf der zumindest 20 Minuten sich der jeweiligen Grenztemperatur möglichst angenähert hat, wobei der Wechsel von der einen Grenztemperatur zu der anderen Grenztemperatur innerhalb von zehn Sekunden erfolgt, wobei besonders bevorzugt Rissbildungen auch dann vermieden werden, wenn wie erläutert zwischen den Grenztemperaturen des entsprechenden Bereichs zyklisch hin- und hergewechselt wird über insgesamt 500 Zyklen, insbesondere über insgesamt 1000 Zyklen, insbesondere über insgesamt 1500 Zyklen.

Das erfindungsgemäße Magnetbauteil bringt im Vergleich zu herkömmlichen Magnetbauteilen eine Vielzahl an Vorteilen mit sich. Indem das Magnetbauteil einen Grundkörper und ein magnetisches Kunststoffteil umfasst, das aus einem elastischen Compound hergestellt ist und über die Anlagefläche hinweg positionsfest am Grundkörper fixiert ist, kann auf sehr einfache Weise ein robustes Magnetbauteil bereitgestellt werden. Denn zum einen braucht in dem Magnetbauteil keine Zwischenschicht mehr zwischen dem Grundkörper und dem magnetischen Kunststoffteil vorgesehen zu werden, was sowohl die Herstellung des Magnetbauteils verkompliziert als auch negative Einflüsse auf die Stabilität des Magnetbauteils haben kann. Vielmehr ermöglicht die elastische Ausgestaltung des Kunststoffteils, dass das Kunststoffteil selbst zwischen Grundkörper und dem magnetischen Kunststoffteil entstehende Spannungen elastisch aufnehmen und abbauen kann, wodurch Rissbildungen in dem magnetischen Kunststoffteil zuverlässig vermieden werden können. Dabei hat der Erfinder überraschend festgestellt, dass auch ein solches elastisches magnetisches Kunststoffteil einen sehr hohen Anteil an magnetischen Partikeln aufweisen kann, so dass mit diesem magnetischen Kunststoffteil ein für die Anwendungszwecke erforderliches Magnetfeld bereitgestellt werden kann. Darüber hinaus kann das elastische magnetische Kunststoffteil auf einfache Weise an dem Grundkörper positionsfest fixiert werden. Beispielsweise kann das Kunststoffteil kraftschlüssig und somit mit Haftreibung mit dem Grundkörper verbunden sein, beispielsweise indem das Kunststoffteil an den Grundkörper angespritzt wird und beim Abkühlen nach dem Anspritzen schwindet und an den Grundkörper anschrumpft. Besonders bevorzugt kann auch ein Formschluss zwischen dem Kunststoffteil und dem Grundkörperteil vorgesehen sein. Besonders bevorzugt ist der Formschluss so ausgebildet, dass von den beiden Bestandteilen des Magnetbauteils, nämlich Grundkörper und magnetischem Kunststoffteil, zumindest einer Aussparungen aufweist, in die der andere Bestandteil eingreift, wobei bevorzugt diese Aussparungen eine Außenkontur aufweisen, mit der die Aussparungen an dem anderen Bestandteil anliegen, die einen abgerundeten Verlauf aufweisen und somit keine scharfen Kanten aufweisen, bevorzugt Winkel von 90° in ihrem Verlauf vermeiden, damit problematische Materialbelastungen verhindert werden können. Die Aussparungen können beispielsweise als Einkerbungen und/oder Löcher ausgebildet sein. Besonders bevorzugt ist der Grundkörper als Buchse, Welle oder Scheibe ausgebildet, wobei dem Grundkörper eine Rotationsachse zugeordnet ist, um die er zu drehen ist, wenn er bestimmungsgemäß an einem zu rotierenden Bauteil befestigt ist. Beispielsweise kann der Grundkörper symmetrisch zu dieser ihm zugeordneten Rotationsachse ausgebildet sein. Besonders bevorzugt weist der Verlauf der Aussparungen um diese Rotationsachse eine Außenkontur auf, die abgerundet ist und insbesondere keine 90° Winkel aufweist, insbesondere lediglich Winkel von > 90° aufweist.

Die wesentliche Erkenntnis der Erfindung beruht darauf, dass es besonders vorteilhaft ist, bei dem Magnetbauteil ein elastisches magnetisches Kunststoffteil bereitzustellen, das entsprechend aus einem elastischen magnetischen Compound hergestellt ist. Während im Stand der Technik herkömmlicherweise davon ausgegangen wird, dass zur Anbindung eines magnetischen Kunststoffteils an einen Grundkörper, der im Wesentlichen inelastisch ist und dem beschriebenen bestimmungsgemäßen Zweck dient, wegen der durch die magnetischen Partikel vorgegebenen Materialeigenschaften des Kunststoffteils entweder eine sehr komplexe Ausgestaltung des Magnetbauteils oder bevorzugt das Vorsehen einer elastischen Zwischenschicht zwischen dem Grundkörper und dem Kunststoffbauteil erforderlich ist, geht die Erfindung einen anderen Weg, indem das Kunststoffteil selbst aus einem elastischen Compound hergestellt ist. Als besonders vorteilhaft hat sich herausgestellt, dass das Compound eine Zugspannung von 30 MPa bis 100 MPa, insbesondere von 40 MPa bis 90 MPa aufweist und/oder eine Dehnung bei Bruch von 1 % bis 6 %, insbesondere von 1,5 % bis 5 % aufweist und/oder vorzugsweise ein Zug-E-Modul von 7 GPa bis 30 GPa, insbesondere von 10 GPa bis 25 GPa aufweist. Dabei ist auf Werte abgestellt, die sich bei einer Messung der genannten Werte nach DIN ISO 527-1/-2 ergeben. Bei der normgerechten Ermittlung der genannten Werte mittels Zugversuches bei Normklima ist eine Prüfgeschwindigkeit von 5 mm pro Minute vorgesehen. Die Ermittlung des E-Moduls ist in einem Dehnungsbereich von 0,005 % bis 0,025 % vorgenommen. Mit Normklima ist eine Umgebungstemperatur von 23 °C und eine relative Feuchte der Umgebungsluft von 50 % gemeint, wobei ein zu messender Prüfkörper bereits vor der Messung für eine Dauer von mindestens 16 Stunden dem Normklima auszusetzen ist. Allgemein ist bei Normverweisen immer die zum Anmeldezeitpunkt gültige Normversion gemeint. Besonders bevorzugt weist das Compound und somit das Kunststoffteil einen Zug-E-Modul auf, der weniger als die Hälfte, insbesondere weniger als ein Drittel, insbesondere weniger als ein Fünftel, insbesondere weniger als ein Zehntel des Zug-E-Moduls des Grundkörpermaterials und somit des Grundkörpers beträgt. Der E-Modul des Grundkörpermaterials ist dabei durch Anwendung der für die jeweilige Materialklasse, der das Grundkörpermaterial zugehörig ist, geltenden Norm für den Zugversuch zu ermitteln, beispielsweise DIN EN ISO 6892-1 für Metall oder DIN EN ISO 527-4/-5 für faserverstärkte Kunststoffe, wobei bei Faserverbundkunststoffen auf den maximalen E-Modul in Faserrichtung abzustellen ist. Die Auswahl der Bestandteile, die beim Compoundieren zur Herstellung des Compounds miteinander vermischt werden, zum Erzielen eines Compounds mit den genannten Werten hat sich als besonders vorteilhaft erwiesen, da dann das Compound die Herstellung eines magnetischen Kunststoffteils ermöglicht, das wie genannt die Rissbildung besonders effektiv vermeidet und darüber hinaus einen hinreichenden Anteil an magnetischen Partikeln aufweist und eine hinreichende Robustheit aufweist, so dass es zuverlässig positionsfest an dem Grundkörper fixiert werden kann. Durch das Vorsehen der angegebenen Verhältnisse der Zug-E-Module von Kunststoffbauteil und Grundkörper kann eine solche Rissbildung auf überraschend einfache Weise vermieden werden, während die beiden Bestandteile des Magnetbauteils für ihren jeweiligen Zweck besonders geeignete Materialeigenschaften aufweisen. Weiterhin hat sich dem Erfinder überraschenderweise offenbart, dass das Compound mit Eigenschaften gemäß den angegebenen Werten bevorzugt direkt, vorzugsweise mittels Spritzgießverfahren, auf den Grundkörper aufbringbar ist, wobei das magnetische Kunststoffteil mit der gewünschten Geometrie erzeugbar und gleichzeitig mit dem Grundkörper fügbar ist. Dadurch kann es ermöglicht sein, auf Zwischenschritte in der Herstellung, wie beispielsweise die Herstellung eines magnetischen Kunststoffteils und dem anschließenden Aufbringen des magnetischen Kunststoffteils auf den Grundkörper in einem separaten Montageschritt, zu verzichten und die Herstellung effizienter zu gestalten.

Als besonders vorteilhaft hat sich herausgestellt, als polymeres Trägermaterial einen teilkristallinen Thermoplast vorzusehen. Besonders bevorzugt besteht das polymere Trägermaterial zu mindestens 80 Gew.-% aus beispielsweise teilkristallinen Thermoplasten Polyethylen (PE), Polypropylen (PP), thermoplastische Elastomere (TPE), Polyamid (PA), Polybutylenterephthalat (PBT), Polyphenylsulfit (PPS) oder ähnlichem. Besonders bevorzugt besteht das polymere Trägermaterial zu mindestens 80 Gew.-% aus einem Polyester und/oder aus zumindest einem Polyamid. Wegen der niedrigeren Viskosität hat sich als besonders vorteilhaft herausgestellt, dass das polymere Trägermaterial zu mindestens 50 Gew.-%, insbesondere zu mindestens 80 Gew.-% aus zumindest einem aliphatischen Polyamid besteht. Allgemein ist das polymere Trägermaterial bevorzugt zu über 80 Gew.-% aus einem teilkristallinen Thermoplast hergestellt und zeichnet sich durch eine besonders hohe Temperaturbeständigkeit aus, so dass das Compound dauerhaft bei einer Umgebungstemperatur von 125 °C verwendet werden kann. Als besonders vorteilhaft hat sich herausgestellt, als polymeres Trägermaterial ein Blend vorzusehen, das unterschiedliche Polymere umfasst, insbesondere unterschiedliche Polyamide. Beispielsweise hat sich als besonders vorteilhaft herausgestellt, das polymere Trägermaterial herzustellen, indem verschiedene Polyamide, insbesondere aliphatische Polyamide, miteinander vermischt werden. Allgemein hat sich als besonders vorteilhaft herausgestellt, das Compound so herzustellen, dass das Compound, aus dem das magnetische Kunststoffteil hergestellt ist, zu zumindest 5 Gew.-%, insbesondere zu zumindest 8 Gew.-%, insbesondere zwischen 5 Gew.-% und 20 Gew.-%, insbesondere zwischen 8 Gew.-% und 16 Gew.-% aus Polymer besteht. Besonders bevorzugt werden beim Compoundieren zum Herstellen des Compounds weitere Additive hinzugefügt, insbesondere Haftvermittler, Gleitmittel und/oder ein Thermostabilisator, wobei besonders bevorzugt das Compound und somit das magnetische Kunststoffteil zu 0,05 Gew.-% bis 2 Gew.-%, insbesondere zu 0,1 Gew.-% bis 1 Gew.-%, insbesondere zu 0,2 Gew.-% bis 0,8 Gew.-% aus einem Haftvermittler besteht und/oder zu 0,1 Gew.-% bis 5 Gew.-%, insbesondere zu 0,1 Gew.-% bis 3 Gew.-% aus Gleitmittel besteht und/oder zu 0,02 Gew.-% bis 2 Gew.-%, insbesondere zu 0,03 Gew.-% bis 1 Gew.-% aus Thermostabilisatoren besteht und/oder zu 0,5 Gew.-% bis 5 Gew.-% aus Schlagzähigkeitsmodifikatoren besteht. Dem Fachmann, d. h. einem Spezialisten in Kunststoffverarbeitung, sind gängige Haftvermittler, Gleitmittel, Thermostabilisatoren und Schlagzähigkeitsmodifikatoren bekannt, und das Hinzufügen entsprechender Additive beim Compoundieren zur Herstellung eines Compounds ist im Stand der Technik üblich. So können als Haftvermittler beispielsweise Silane, Titanate, Zirkonate, Maleinsäureanhydrid gepfropte Polyolefine eingesetzt werden, als Gleitmittel beispielsweise Alkohole, beispielsweise Ester, Fettsäuren, Wachse, Stearate und Metallseifen eingesetzt werden. Als Thermostabilisatoren können beispielsweise sterisch gehinderte Phenole, Benzoate, Amide und Metallsalze verwendet werden, wobei solche Thermostabilisatoren grundsätzlich dem Zweck dienen, als Radikalfänger Radikale abzufangen, die beispielsweise aufgrund von erhöhter Wärme frei werden können, um einem Kettenabbau des Polymers und somit einer Versprödung des Polymers und somit des Compounds entgegenzuwirken. Schlagzähigkeitsmodifikatoren sind üblicherweise niedermolekulare Stoffe oder Polymere, die einen niedrigeren Schmelzpunkt als das polymere Matrixmaterial des Compounds aufweisen, durch das die polymere Matrix des polymeren Trägermaterials gebildet ist und das mehr als 80 Gew.-% des polymeren Trägermaterials einnimmt.

Der Erfinder hat somit erkannt, dass unerwarteterweise durch herkömmliche Compoundierverfahren, bei denen Additive insbesondere in den angegebenen Bereichen eingesetzt werden, auf einfache Weise ein elastisches Compound mit den beschriebenen magnetischen Eigenschaften erzeugt werden kann durch das, wie erläutert, Rissbildungen und somit eine Schädigung des Magnetbauteils verhindert werden kann. Dabei hat sich als besonders vorteilhaft herausgestellt, in dem Compound magnetische Partikel zu verwenden, die eine mittlere Partikelgröße von 0,5 µm bis 100 µm, insbesondere von 0,5 µm und 5 µm, insbesondere von 1 µm bis 5 µm, insbesondere von 1 µm bis 3 µm aufweisen. Als besonders vorteilhaft hat sich herausgestellt, als magnetische Partikel ferritische Partikel zu verwenden, die eine Partikelgröße von 0,5 µm und 5 µm, insbesondere von 1 µm bis 5 µm, insbesondere von 1 µm bis 3 µm aufweisen. Die entsprechende Partikelgröße ist für die Beschaffenheit, insbesondere elastische Eigenschaft des Compounds in Kombination mit dem angegebenen prozentualen Anteil der magnetischen Partikel im Compound besonders vorteilhaft. Die Angabe der Partikelgröße kann sich insbesondere auf die Ermittlung mittels optischer Messmethoden, insbesondere mittels Durchlichtmikroskopie beziehen. Dabei hat sich allgemein als besonders vorteilhaft herausgestellt, das Compound so herzustellen, dass es eine Schmelze-Massefließrate, die dem Fachmann auch als MFI (melt flow index) oder MFR (melt flow rate) bekannt ist, zwischen 30 g pro 10 Minuten und 150 g pro 10 Minuten aufweist, wobei abgestellt wird auf eine Messung nach DIN ISO 1133A, bei der eine Probenmasse bei 270 °C geschmolzen und, belastet mit einem Gewicht von 10 kg, durch eine genormte Kapillare gepresst wird. Außerdem hat sich als allgemein vorteilhaft herausgestellt, das Compound in einer solchen Dichte herzustellen, dass die Dichte zwischen 2,0 g/cm³ und 5,0 g/cm³, insbesondere zwischen 3,0 g/cm³ und 4,0 g/cm³ liegt, wobei abgestellt wird auf eine Messung der Dichte gemäß DIN EN ISO 1183, besonders bevorzugt auf eine Messung der Dichte gemäß DIN EN ISO 1183-2. Dabei ist zu berücksichtigen, dass das Vorsehen einer entsprechenden Dichte für den Fachmann ersichtlich ist aus dem Zusammenhang der Verwendung entsprechender Polymere und entsprechender magnetischer Partikel, wobei der Erfinder festgestellt hat, dass sich bei den entsprechenden Verhältnissen zwischen magnetischen Partikeln, Polymeren und weiteren Additiven besonders vorteilhafte Eigenschaften des Compounds ergeben, wenn die angegebene Dichte des Compounds erreicht ist.

Die Erfindung betrifft ferner die Verwendung eines Grundkörpers, magnetischer Partikel und eines Polymerpulvers zur Realisierung eines Magnetbauteils, insbesondere eines wie oben erläuterten erfindungsgemäßen Magnetbauteils. Die Erfindung betrifft ferner ein Verfahren zur Herstellung eines Magnetbauteils, insbesondere eines erfindungsgemäßen Magnetbauteils. Das Polymerpulver umfasst ein oder mehrere Polymere in Granulat- oder Pulverform sowie die neben den magnetischen Partikeln zuzugebenden Additive. Gemäß einem Aspekt der Erfindung wird ein elastisches Compound erzeugt, das zu mindestens 60 Gew.-% aus den magnetischen Partikeln und zu höchstens 40 Gew.-% aus sich aus dem Polymerpulver ergebendem Polymer besteht, wobei das, insbesondere durch das Aufschmelzen schmelzeflüssige, Compound auf den Grundkörper aufgetragen, insbesondere unmittelbar auf den Grundkörper aufgetragen wird und an diesem befestigt wird, insbesondere ausschließlich durch das direkte Auftragen befestigt wird, beispielsweise indem durch das Auftragen des Compounds auf den Grundkörper im Rahmen eines Spritzgießprozesses und das anschließende Abkühlen ein Aufschrumpfen des Compounds auf den Grundkörper erreicht wird, insbesondere unter Erzeugung einer Übermaßpassung, unter Ausbildung einer Haftreibung zwischen dem Compound und dem Grundkörper und/oder durch Erzeugen eines Formschlusses durch Auftragen des Compounds auf den Grundkörper, der hierzu entsprechende Aussparungen aufweist. Bei der bevorzugten Ausführungsform werden somit keine weiteren Fixiermittel, wie beispielsweise Zwischenschichten, insbesondere Klebeschichten, vorgesehen.

In weiteren vorteilhaften Ausführungsformen kann anstatt des Polyesters Polyamid vorgesehen sein. Es hat sich allgemein als vorteilhaft erwiesen, bei einem Anteil von mehr als 80 Gew.-% magnetischer Partikel im Kunststoffteil als Polymer zumindest überwiegend Polyamid zu verwenden.

Die Erfindung betrifft ferner ein Verfahren zur Herstellung eines elastischen magnetischen Compounds, wobei zur Herstellung des Compounds magnetische Partikel in einem solchen Verhältnis zu einem Polymerpulver gemischt werden, dass in dem hergestellten Compound die magnetischen Partikel mindestens 60 Gew.-% des Compounds ausmachen und die sich aus dem Polymerpulver ergebende Polymere höchstens 40 Gew.-% des Compounds ausmachen. Die erfindungsgemäße Verwendung und die erfindungsgemäßen Verfahren können miteinander kombiniert werden und können jeweils und in ihrer Kombination Merkmale aufweisen, die dem Fachmann im Zusammenhang mit den obigen Erläuterungen zu einem erfindungsgemäßen Magnetbauteil ersichtlich sind. Analog kann das erfindungsgemäße Magnetbauteil Merkmale aufweisen, die dem Fachmann aus der vorliegenden Beschreibung einer erfindungsgemäßen Verwendung und eines erfindungsgemäßen Verfahrens und den jeweiligen bevorzugten Ausführungsformen ersichtlich sind. An dieser Stelle sei ferner angemerkt, dass das erfindungsgemäße Magnetbauteil, das erfindungsgemäße Verfahren und die erfindungsgemäße Verwendung jeweils Merkmale aufweisen können, die aus der obigen Beschreibung gattungsgemäßer Magnetbauteile ersichtlich sind.

Besonders bevorzugt wird bei der erfindungsgemäßen Verwendung bzw. dem erfindungsgemäßen Verfahren während der Erzeugung des Compounds das Polymerpulver mit den magnetischen Partikeln vermischt und im Anschluss aufgeschmolzen. Bevorzugt wird zuerst das Polymerpulver aufgeschmolzen, wonach dann dem aufgeschmolzenen Polymerpulver die magnetischen Partikel hinzugefügt werden und mit dem aufgeschmolzenen Polymerpulver vermischt werden. Besonders bevorzugt wird bei der erfindungsgemäßen Verwendung bzw. dem erfindungsgemäßen Verfahren zuerst das Polymerpulver aufgeschmolzen, wonach dann dem aufgeschmolzenen Polymerpulver Haftvermittler, Gleitmittel, Thermostabilisatoren und/oder Schlagzähigkeitsmodifikatoren zugefügt werden und mit dem aufgeschmolzenen Polymerpulver vermischt werden. Bei dem Vermischen wird selbstverständlich bevorzugt auf ein gleichmäßiges Vermischen abgestellt, wobei mit gleichmäßigem Vermischen insbesondere ein homogenes Verteilen der Füllstoffe und Additive in dem aufgeschmolzenen Polymerpulver gemeint ist. Bevorzugt wird das Compound in einem Extrusionsverfahren hergestellt, wobei insbesondere ein vorzugsweise gleichlaufender Zwei-Wellen-Extruder eingesetzt ist. Der Fachmann ist durch seine Kenntnis dazu befähigt, beim Einsatz des Extrusionsverfahrens geeignete Entgasungszonen vorzusehen, verschiedene Schneckengeometrien einzusetzen und/oder verschiedene Temperierzonen vorzusehen, die er zugunsten einer schonenden Verarbeitung zu skalieren und auf den verwendeten Extruder anzupassen weiß. Besonders bevorzugt werden dem aufgeschmolzenen Polymerpulver die magnetischen Partikel erst zugefügt, nachdem zumindest Schlagzähigkeitsmodifikatoren dem aufgeschmolzenen Polymerpulver hinzugefügt wurden. Der Erfinder hat festgestellt, dass die Materialgüte des Compounds besonders verbessert werden kann, wenn die magnetischen Partikel erst nach dem Aufschmelzen des Polymerpulvers hinzugefügt werden und insbesondere erst nach dem Hinzufügen der Schlagzähigkeitsmodifikatoren, um unerwünschten dissipationsbedingten Abbau der intrinsischen Viskosität, bzw. des Molekulargewichts und/oder qualitätsmindernde chemische Reaktionen zwischen den magnetischen Partikeln und entsprechenden Additiven zu vermeiden. Besonders bevorzugt werden die magnetischen Partikel erst zu dem aufgeschmolzenen Polymerpulver hinzugefügt, nachdem sämtliche Additive zuvor dem aufgeschmolzenen Polymerpulver hinzugefügt wurden. Allgemein wird besonders bevorzugt ein Polymerpulver verwendet, das unterschiedliche Polymere umfasst, insbesondere, wie oben mit Bezug auf das Magnetbauteil erläutert, unterschiedliche Polyamide. Als besonders vorteilhaft hat sich herausgestellt, das Compound herzustellen, indem ein polymeres Trägermaterial verwendet wird, dessen Dichte zwischen 1,0 g/cm³ und 1,3 g/cm³ beträgt und dessen Schmelze-Massefließrate zwischen 50 g / 10 min und 200 g / 10 min (Schmelztemperatur 270 °C, 10 kg Auflagelast nach DIN ISO 1133A) beträgt und dessen Zug-E-Modul zwischen 1,0 GPa und 4,0 GPa und dessen Dehnung bei Bruch 10 Gew.-% bis 60 Gew.-% beträgt. Das polymere Trägermaterial kann dabei insbesondere gezielt zunächst ohne Hinzufügen von magnetischen Partikeln hergestellt werden und darauf abgestimmt werden, die genannten Eigenschaften zu erreichen, wonach anschließend das Compound hergestellt wird, indem die Bestandteile des polymeren Trägermaterials, die zum Erreichen der genannten Eigenschaften des polymeren Trägermaterials für sich genommen als polymerer Kunststoff erforderlich sind, verwendet werden und mit den magnetischen Partikeln in den angegebenen, vorteilhaften Verhältnissen vermischt werden, wodurch ein Compound mit den angegebenen besonders vorteilhaften Eigenschaften hergestellt werden kann. Insbesondere kann das Compound ohne den Zwischenschritt der Herstellung des polymeren Trägermaterials erfolgen, wobei insbesondere die Bestandteile des polymeren Trägermaterials in gleichem Verhältnis relativ zueinander in das Compound einzumischen sind, wie in das polymere Trägermaterial.

Besonders bevorzugt wird das magnetische Kunststoffteil mittels Spritzgießverfahrens hergestellt. Besonders bevorzugt ist die Verteilung der magnetischen Partikel in dem Kunststoffteil dergestalt homogen, dass eine erste Volumeneinheit in dem Kunststoffteil definierbar ist, die an dem Grundkörper direkt anliegt, wobei eine zweite Volumeneinheit definierbar ist, deren Volumen identisch zu dem Volumen der ersten Volumeneinheit ist, wobei die zweite Volumeneinheit an der dem Grundkörper abgewandten Seite der ersten Volumeneinheit angeordnet ist und sich der Anteil der magnetischen Partikel (in Gew.-%) in der ersten Volumeneinheit um weniger als 30 %, insbesondere um weniger als 20 % von dem Anteil in der zweiten Volumeneinheit unterscheidet, wobei die prozentuale Abweichung auf den Anteil in der ersten Volumeneinheit abstellt, wobei insbesondere das Volumen jeweils mindestens 1 mm³, insbesondere 3 mm³ beträgt. Besonders bevorzugt wird das magnetische Kunststoffteil mittels Spritzgießverfahrens hergestellt und dabei während seines Herstellungsverfahrens direkt an den Grundkörper angespritzt. Besonders bevorzugt sind Grundkörper und an den Grundkörper angespritztes Kunststoffteil so zueinander ausgebildet, dass das Kunststoffteil über seine Anlagefläche hinweg in Haftreibungskontakt mit dem Grundkörper verbunden ist und/oder formschlüssig mit dem Grundkörper verbunden ist. Besonders bevorzugt wird das magnetische Kunststoffteil hergestellt, indem es umfänglich um den Grundkörper herum an den Grundkörper angespritzt wird oder an eine umlaufende Innenseite von innen an den Grundkörper angespritzt wird, wobei die umlaufende Innenseite des Grundkörpers einen von dem Grundkörper umschlossenen Hohlraum umfänglich umschließt. Besonders bevorzugt ist dem Grundkörper eine Rotationsachse zugeordnet, wobei das magnetische Kunststoffteil umfänglich um die Rotationsachse an den Grundkörper angespritzt wird, entweder an einer von der Rotationsachse wegweisenden Außenseite des Grundkörpers umfänglich geschlossen oder segmentiert um die Rotationsachse oder an einer zur Rotationsachse weisenden Innenseite des Grundkörpers umfänglich geschlossen oder segmentiert um die Rotationsachse. Hierzu und allgemein bevorzugt ist der Grundkörper aus einer Metallverbindung, insbesondere ausschließlich aus Metall hergestellt und weist bevorzugt die Form einer Welle oder einer Buchse oder einer kreisförmigen Scheibe auf.

Die Erfindung wird nachfolgend unter Bezugnahme auf sechs Figuren anhand von Ausführungsbeispielen näher erläutert.

Es zeigen:
- Figur 1:: in schematischen Prinzipdarstellungen verschiedene Ansichten einer Ausführungsform eines erfindungsgemäßen Magnetbauteils;
- Figur 2:: in einer schematischen Prinzipdarstellung eine Ansicht einer weiteren Ausführungsform eines erfindungsgemäßen Magnetbauteils;
- Figur 3:: in schematischen Prinzipdarstellungen eine weitere Ausführungsform eines erfindungsgemäßen Magnetbauteils;
- Figur 4:: in schematischen Prinzipdarstellungen eine weitere Ausführungsform eines erfindungsgemäßen Magnetbauteils;
- Figur 5:: in schematischen Prinzipdarstellungen eine weitere Ausführungsform eines erfindungsgemäßen Magnetbauteils.

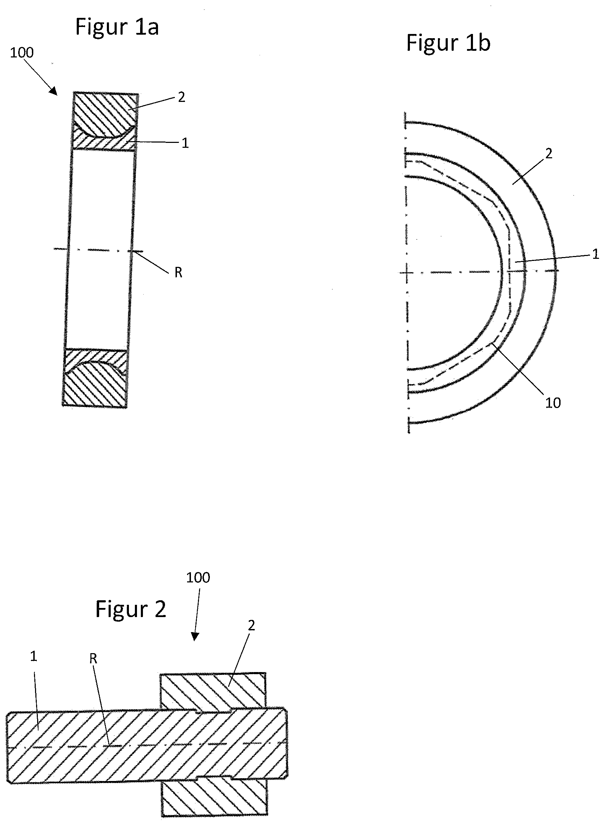

In Figur 1 umfassend die Figuren 1a und 1b ist eine Ausführungsform eines erfindungsgemäßen Magnetbauteils in Prinzipdarstellungen dargestellt. Figur 1a zeigt die Ansicht auf einen Querschnitt des Magnetbauteils 100, Figur 1b zeigt eine schematische Aufsicht auf das Magnetbauteil 100. Das Magnetbauteil 100 weist einen Grundkörper 1 und ein magnetisches Kunststoffteil 2 auf. Der Grundkörper 1 ist als Buchse ausgebildet und weist eine Aussparung auf, in die das Kunststoffteil 2 eingebettet angeordnet ist. Das Kunststoffteil 2 ist mittels Spritzgießverfahrens an die Buchse 1 angespritzt hergestellt. Die Aussparung der Buchse 1, in die das Kunststoffteil 2 eingreift, weist die in Figur 1b schematisch eingezeichneten Schlüsselflächen 10 auf, die von der Außenkontur der Aussparung gebildet sind und die einen verbesserten Formschluss zwischen dem Kunststoffteil 2 und dem Grundkörper 1 gewährleisten. In Figur 1a ist die dem Grundkörper 1 und somit dem Magnetbauteil 100 zugeordnete Rotationsachse R schematisch eingezeichnet. Aus der Zusammenschau von Figur 1a und Figur 1b, wobei Figur 1b eine schematische Aufsicht auf das Magnetbauteil 100 entlang der Rotationsachse R zeigt, ist ersichtlich, dass zwischen dem magnetischen Kunststoffteil 2 und der Buchse 1 ein besonders vorteilhafter Formschluss besteht, der einer Relativbewegung von Kunststoffteil 2 und Buchse 1 sowohl entlang der Rotationsachse R als auch senkrecht zur Rotationsachse R effektiv entgegenwirkt, insbesondere auch einem Verdrehen des Kunststoffteils 2 zur Buchse 1 um die Rotationsachse R, da die Schlüsselflächen 10, die von der Außenkontur der Aussparung der Buchse 1 gebildet sind, in einer Ebene senkrecht zur Rotationsachse R nicht rotationssymmetrisch um die Rotationsachse R verlaufen. Bei dem beschriebenen Ausführungsbeispiel besteht das magnetische Kunststoffteil 2 zu 90 Gew.-% aus ferritischen, hartmagnetischen Partikeln, die eine mittlere Partikelgröße von 1,5 µm aufweisen. Das magnetische Kunststoffteil 2 besteht ferner zu 9 Gew.-% aus einem Polymer, das vorliegend durch unterschiedliche Polyamide gebildet ist, sowie zu 0,1 Gew.-% aus einem Haftvermittler, zu 0,2 Gew.-% aus Gleitmittel, zu 0,1 Gew.-% aus einem Thermostabilisator und zu 0,6 Gew.-% aus einem Schlagzähigkeitsmodifikator. Vorliegend ist der Schlagzähigkeitsmodifikator, wie allgemein vorteilhaft, ein Polymer, das mit Maleinsäureanhydrid funktionalisiert worden ist und somit lediglich über Nebenvalenzbindung mit dem Polymer des polymeren Trägermaterials zusammenwirkt. Vorliegend ist als Schlagzähigkeitsmodifikator ein Phtalat verwendet, wobei, wie dem Fachmann geläufig, auch Stoffe auf Basis von beispielsweise Adipaten oder Ionomeren Verwendung als Schlagzähigkeitsmodifikator verwenden können.

In Figur 2 ist eine weitere Ausführungsform eines erfindungsgemäßen Magnetbauteils 100 in einer schematischen Prinzipdarstellung dargestellt. Bei diesem Ausführungsbeispiel ist der Grundkörper 1 als metallische Welle mit einer Aussparung ausgebildet, in die das Kunststoffteil 2 eingreift. Sowohl Grundkörper 1 als auch magnetisches Kunststoffteil 2 sind jeweils rotationssymmetrisch um eine in Figur 2 schematisch eingezeichnete Rotationsachse R ausgebildet, was erfindungsgemäß allgemein vorteilhaft ist. Wie zu Figur 1 erläutert ist auch in Figur 2 das magnetische Kunststoffteil 2 über Spritzgießverfahren an den Grundkörper 1 außen umfänglich um die Rotationsachse R angespritzt. In bevorzugten Ausführungsformen können bei dem Ausführungsbeispiel gemäß Figur 2 in der Aussparung der als Welle ausgebildete Grundkörper 1 ebenfalls entsprechende Schlüsselflächen 10 wie in Figur 1 gezeigt vorgesehen sein. Das Kunststoffteil 2 ist mittels Spritzgießverfahren aus einem Compound hergestellt, das zu 71,5 Gew.-% aus magnetischen Partikeln, vorliegend Ferriten, besteht, zu 18 Gew.-% aus einem Polymer, vorliegend Polyester, und zu 2 Gew.-% aus einem Haftvermittler, 3 Gew.-% aus einem Gleitmittel, zu 2,5 Gew.-% aus einem Schlagzähigkeitsmodifikator und zu 3 Gew.-% aus einem Thermostabilisator. Bei dem in Figur 2 beschriebenen Ausführungsbeispiel ist als Haftvermittler ein Silan eingesetzt, als Gleitmittel eine Fettsäure als Schlagzähigkeitsmodifikator ein Adipat und als Thermostabilisator ein Phenol eingesetzt.

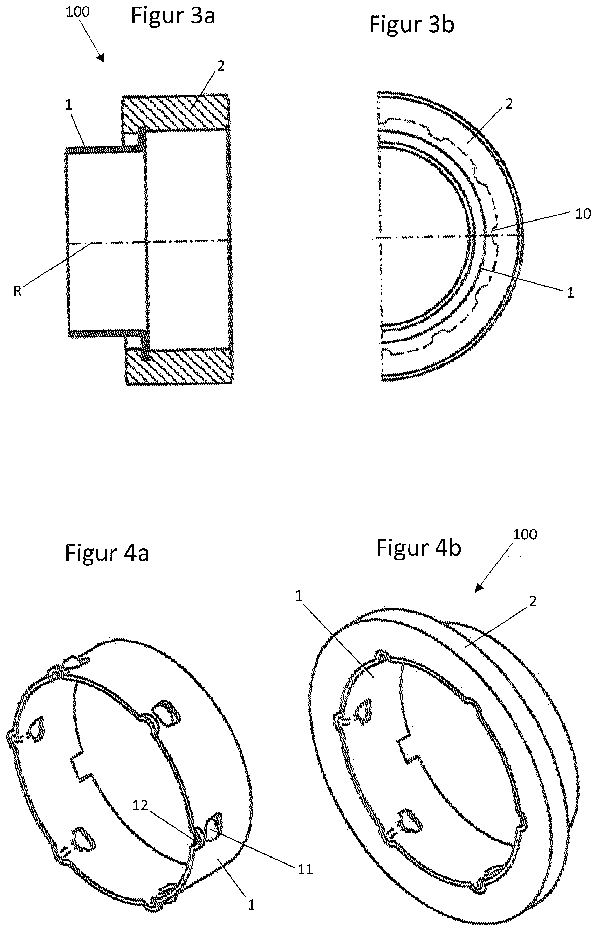

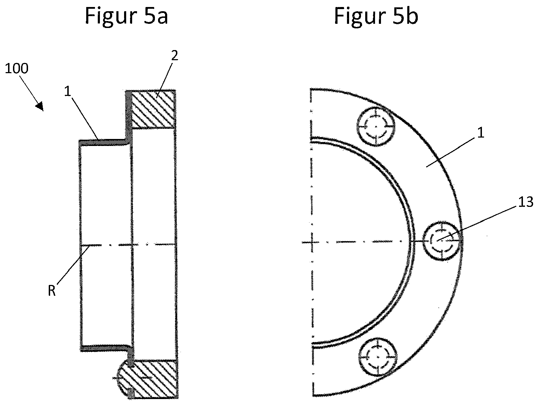

In den Figuren 3 bis 5 sind weitere Ausführungsbeispiele des erfindungsgemäßen Magnetbauteils 100 in schematischen Prinzipdarstellungen dargestellt. Bei diesen Ausführungsformen ist der Grundkörper 1 jeweils aus Metall hergestellt, vorliegend aus Stahl, und das magnetische Kunststoffteil 2 aus einem Compound wie bei dem Ausführungsbeispiel zu Figur 1 erläutert. Das magnetische Kunststoffteil 2 ist stets über Spritzgießverfahren hergestellt und direkt bei dem Herstellungsprozess an den Grundkörper 1 außen und/oder innen umfänglich um die Rotationsachse R angespritzt. Die verschiedenen Ausführungsbeispiele unterscheiden sich lediglich mit Bezug auf die Geometrie und Anordnung von Grundkörper 1 und Kunststoffteil 2 und die sich daraus ergebende Lage des Kunststoffteils 2 relativ zum Grundkörper 1. Bei dem Ausführungsbeispiel gemäß Figur 3 umfassend die Figuren 3a und 3b ist das Kunststoffteil 2 an einen Flansch des Grundkörpers 1, der als Buchse ausgebildet ist, angespritzt, wobei der Flansch Schlüsselflächen 10 ausbildet, in denen Aussparungen vorgesehen sind, so dass eine besonders robuste, positionsfeste Fixierung des Kunststoffteils 2 relativ zur Buchse 1 ermöglicht ist. Bei dem Ausführungsbeispiel gemäß Figur 4 umfassend die Figuren 4a und 4b ist der Grundkörper 1 als Buchse ausgebildet, die zum einen Ausbiegungen 12 und zum anderen Aussparungen 11 mit Laschen aufweist. Das Kunststoffteil 2 ist außen um den Grundkörper 1 so angespritzt, dass es die Ausbiegungen 12 aufnimmt und in die Aussparungen 11 eingreift, wodurch eine besonders zuverlässige positionsfeste Fixierung des Kunststoffteils 2 relativ zum Grundkörper 1 gewährleistet ist. Bei dem Ausführungsbeispiel gemäß Figur 5 umfassend die Figuren 5a und 5b ist der Grundkörper 1 als Buchse ausgebildet, der einen Flansch aufweist, wobei in dem Flansch kreisförmige Aussparungen 13 vorgesehen sind, wobei das Kunststoffteil 2 so auf den Flansch aufgespritzt ist, dass es in die kreisförmigen Aussparungen 13 eingreift zum Gewährleisten einer besonders zuverlässigen Fixierung des Kunststoffteils 2 relativ zum Grundkörper 1.

### Bezugszeichenliste

- 1: Grundkörper
- 2: Kunststoffteil
- 10: Schlüsselfläche
- 11: Aussparung
- 12: Ausbiegung
- 13: Aussparung
- 100: Magnetbauteil
- R: Rotationsachse

## Patentansprüche

1. Magnetbauteil (100) umfassend einen Grundkörper (1) aus einem Grundkörpermaterial und ein mit dem Grundkörper (1) positionsfest verbundenes magnetisches Kunststoffteil (2), wobei das Kunststoffteil (2) aus einem Compound hergestellt ist, das ein polymeres Trägermaterial und in das polymere Trägermaterial eingebettete magnetische Partikel aufweist, und wobei das Grundkörpermaterial und das Compound unterschiedliche thermische Ausdehnungsverhalten aufweisen, **dadurch gekennzeichnet, dass**
das Kunststoffteil (2) eine Anlagefläche aufweist, über die hinweg es mit dem Grundkörper (1) positionsfest verbunden ist, wobei das Compound zu mindestens 60 Gew.-%, insbesondere zwischen 60 Gew.-% und 95 Gew.-%, aus den magnetischen Partikeln besteht und als elastisches Material ausgebildet ist zur Vermeidung von Rissbildungen in dem magnetischen Kunststoffteil (2), wobei insbesondere das Grundkörpermaterial metallisch ist und der Grundkörper (1) insbesondere nach Art einer Buchse, Scheibe oder Welle ausgebildet ist.

2. Magnetbauteil (100) nach Anspruch 1,
**dadurch gekennzeichnet, dass**
das polymere Trägermaterial zumindest ein Polyamid umfasst, wobei das Compound insbesondere zu mindestens 84 Gew.-%, insbesondere zu 84 Gew.-% bis 92 Gew.-% aus magnetischen Partikeln besteht, wobei das Compound einen zumindest doppelt so großen linearen thermischen Ausdehnungskoeffizienten aufweist wie das Grundkörpermaterial und wobei insbesondere das Compound einen E-Modul aufweist, der in einem Bereich von 10 GPa bis 25 GPa liegt.

3. Magnetbauteil (100) nach einem der vorangehenden Ansprüche,
**dadurch gekennzeichnet, dass**
das polymere Trägermaterial ein teilkristallines Thermoplast ist, wobei insbesondere das polymere Trägermaterial zu mindestens 80 Gew.-% aus zumindest einem Polyester und/oder aus zumindest einem Polyamid, insbesondere zumindest einem aliphatischen Polyamid, besteht, wobei insbesondere das polymere Trägermaterial ein Blend ist, das unterschiedliche Polymere umfasst.

4. Magnetbauteil (100) nach einem der vorangehenden Ansprüche,
**dadurch gekennzeichnet, dass**
die magnetischen Partikel eine mittlere Partikelgröße von 0,5 µm bis 100 µm aufweisen.

5. Magnetbauteil (100) nach einem der vorangehenden Ansprüche,
**dadurch gekennzeichnet, dass**
das Compound eine Schmelze-Massefließrate zwischen 30 g pro 10 min und 150 g pro 10 min aufweist.

6. Magnetbauteil (100) nach einem der vorhergehenden Ansprüche,
**dadurch gekennzeichnet, dass**
das magnetische Kunststoffbauteil (2) dazu ausgebildet ist, bei Temperaturwechseln des Magnetbauteils (100) über einen Temperaturbereich von -10 °C bis 100 °C hinweg Materialspannungen, die wegen der unterschiedlichen thermischen Ausdehnungsverhalten von Grundkörper (1) und Kunststoffteil (2) in dem Compound auftreten, unter Vermeidung von Rissbildungen elastisch aufzunehmen.

7. Magnetbauteil (100) nach einem der vorangehenden Ansprüche,
**dadurch gekennzeichnet, dass**
das Compound ein Zug-E-Modul von 7 GPa - 30 GPa und/oder eine Zugspannung von 30 MPa - 100 MPa und/oder eine Bruchdehnung von 1 % bis 6 % aufweist.

8. Magnetbauteil (100) nach einem der vorangehenden Ansprüche,
**dadurch gekennzeichnet, dass**
das Kunststoffteil (2) über die Anlagefläche hinweg in Haftreibungskontakt mit dem Grundkörper (1) verbunden ist und/oder formschlüssig mit dem Grundkörper (1) verbunden ist.

9. Verwendung eines Grundkörpers (1), magnetischer Partikel und eines Polymerpulvers zur Realisierung eines Magnetbauteils (100) nach einem der vorangegangenen Ansprüche,
**dadurch gekennzeichnet, dass**
ein elastisches Compound erzeugt wird, das zu mindestens 60 Gew.-% aus den magnetischen Partikeln und zu höchstens 40 Gew.-% aus sich aus dem Polymerpulver ergebendem Polymer besteht, und das Compound auf den Grundkörper (1) aufgetragen und an diesem befestigt wird.

10. Verwendung nach Anspruch 9,
**dadurch gekennzeichnet, dass**
während der Erzeugung des Compounds zuerst das Polymerpulver aufgeschmolzen wird und dann dem aufgeschmolzenen Polymerpulver Haftvermittler, Gleitmittel, Thermostabilisatoren und/oder Schlagzähigkeitsmodifikatoren zugefügt werden und dem aufgeschmolzenen Polymerpulver die magnetischen Partikel zugefügt werden.

11. Verwendung nach einem der Ansprüche 9 oder 10,
**dadurch gekennzeichnet, dass**
das magnetische Kunststoffteil (2) mittels Spritzgießverfahren hergestellt und insbesondere an den Grundkörper (1) angespritzt wird.

12. Verfahren zur Herstellung eines elastischen magnetischen Compounds für die Realisierung eines Magnetbauteils nach einem der Ansprüche 1 bis 8,
**dadurch gekennzeichnet, dass**
magnetische Partikel in einem solchen Verhältnis zu einem Polymerpulver gemischt werden, dass in dem hergestellten Compound die magnetischen Partikel mindestens 60 Gew.-% des Compounds und die sich aus dem Polymerpulver ergebenden Polymere höchstens 40 Gew.-% des Compounds ausmachen.
